# EUROPÄISCHE PATENTSCHRIFT

(11) **EP 1 488 676 B1**
(45) Veröffentlichungstag und Bekanntmachung des Hinweises auf die Patenterteilung: **02.11.2006**
(21) Anmeldenummer: 04102623.8
(22) Anmeldetag: 09.06.2004
(51) Int. Cl.: A01D 41/00, A01D 43/08, B62D 49/06

(54) **Selbstfahrende Erntemaschine**
Self-propelled harvesting machine
Moissonneuse automotrice

(30) Priorität: 18.06.2003 DE 10327478
(43) Veröffentlichungstag der Anmeldung: 22.12.2004
(73) Patentinhaber: DEERE & COMPANY, Moline, Illinois 61265-8098 (US)
(72) Erfinder: Schäfer, Peter, 66265, Heusweiler (DE)
(74) Vertreter: Holst, Sönke

(56) Entgegenhaltungen:
- GB-A- 1 173 920
- GB-A- 1 465 891
- US-A- 3 193 995
- US-A- 4 611 683

## Beschreibung

Die Erfindung betrifft eine selbstfahrende Erntemaschine mit einem Fahrgestell, an dem sich im Eingriff mit dem Erdboden befindliche Mittel angebracht sind, die zum Vortrieb und zum Lenken der Erntemaschine eingerichtet sind und von denen vordere Mittel in einer Vorwärtsfahrtrichtung vor hinteren Mitteln angeordnet sind, und mit einer Einrichtung, die betreibbar ist, zur Erzielung einer geeigneten Gewichtskraftverteilung auf die vorderen und hinteren Mittel den Abstand zwischen den vorderen Mitteln und den hinteren Mitteln entlang der Vorwärtsfahrtrichtung zu verändern.

Bei selbstfahrenden Erntemaschinen hängt die Belastung der Räder und somit die Bodenverdichtung in einem erheblichen Maß von der Gewichtskraft (Masse) eines montierten Erntevorsatzes und einer eventuellen Anhängelast ab. Im Stand der Technik erfolgt eine Ballastierung des Maschinenhecks abhängig von der Art des Erntevorsatzes. Bei relativ schweren Erntevorsätzen muss somit relativ viel Heckballast montiert werden, um durch eine hinreichende Belastung der lenkbaren Hinterräder ein sicheres Fahrverhalten der Erntemaschine zu gewährleisten. Durch diese Maßnahme wird das Gewicht der Erntemaschine erheblich vergrößert, was zur nachteiligen Bodenverdichtung beiträgt. Außerdem muss der Heckballast bei einem Wechsel des Erntevorsatzes angepasst werden, was mit einem nicht unerheblichen Zeitaufwand verbunden ist.

In der DE 100 04 622 A und der AT 285 439 A werden Flurförderfahrzeuge mit verstellbarem Radstand beschrieben, der dazu dient, dem Fahrzeug insbesondere bei größeren Hubhöhen eine größere Standfestigkeit zu verleihen. Die US 3 193 995 A und GB 1 173 920 A zeigen Mähdrescher mit einem teleskopierbaren Träger für die Hinterräder, während die US 4 611 683 A und die GBN 1 465 891 A landwirtschaftliche Trägerfahrzeuge mit in Fahrtrichtung ausziehbarem Fahrgestell vorschlagen. Hier sind jeweils manuelle Eingriffe zur Verstellung des Achsabstands erforderlich.

Das der Erfindung zu Grunde liegende Problem wird darin gesehen, eine selbstfahrende Erntemaschine dahingehend weiterzubilden, dass die oben erwähnten Nachteile nicht mehr oder in einem geringeren Maß auftreten.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den Abstand zwischen den vorderen und hinteren im Eingriff mit dem Erdboden befindlichen Mitteln, bei denen es sich um Räder und/oder Raupenlaufwerke handeln kann, am Fahrgestell der selbstfahrenden Erntemaschine durch eine geeignete Einrichtung variabel zu gestalten. Bei Verwendung von Rädern ist somit der Radstand verstellbar. In der Regel sind die vorderen Mittel angetrieben und starr mit dem Fahrgestell verbunden, während die Position des oder der in Vorwärtsfahrtrichtung hinteren Mittel(s), das oder die in der Regel lenkbar ist oder sind, gegenüber dem Fahrgestell verändert wird. Es eine selbsttätige Einstellung des Abstands zwischen den vorderen und hinteren im Eingriff mit dem Erdboden befindlichen Mitteln vorgesehen.

Auf diese Weise kann durch Variation des Radstands der Erntemaschine eine Anpassung an die Gewichtskraft des jeweils verwendeten Erntevorsatzes erfolgen. Die Gewichtskraft der Erntemaschine kann auf eine geeignete Weise auf die vorderen und hinteren Mittel verteilt werden, so dass man eine hinreichend hohe Belastung der hinteren Mittel erzielt, welche zu einer guten Lenkbarkeit führt. Gleichzeitig wird die Belastung der vorderen Mittel reduziert, so dass die Bodenverdichtung vermindert wird. Die Ballastierung des Hecks der Erntemaschine kann eventuell ganz entfallen, wodurch man eine Verminderung der Gewichtskraft der Erntemaschine erzielt. Weiterhin wird die Rüstzeit der Erntemaschine erheblich verkürzt, so dass ihre Flexibilität vergrößert wird. Durch die selbsttätige Einstellung des Abstands zwischen den vorderen und hinteren im Eingriff mit dem Erdboden befindlichen Mitteln vermeidet man, dass insbesondere unerfahrene Bediener durch Fehleingaben ungünstige Fahreigenschaften der Erntemaschine bewirken könnten.

Der einzustellende Abstand hängt vornehmlich von der Gewichtskraft eines Erntevorsatzes und, wenn vorhanden, von einer Anhängelast ab. Diese Größen werden somit von der Einrichtung zur Verstellung des Abstands berücksichtigt. Die Gewichtskraft des Erntevorsatzes kann durch einen Bediener manuell eingegeben oder durch einen Sensor erfasst werden. Auch die Verwendung einer elektronischen Speichereinheit, die dem Erntevorsatz zugeordnet ist, kann zur Eingabe der Gewichtskraft des Erntevorsatzes dienen. Die Speichereinheit kann sich fest am Erntevorsatz befinden und durch eine (Bus-) Leitung auf die Einrichtung zur Verstellung des Abstands übertragen werden. Alternativ findet eine Speicherkarte oder dgl. Verwendung, die in ein geeignetes Lesegerät eingeführt wird. Die Erfassung der Gewichtskraft einer Anhängelast erfolgt analog.

Wird die Gewichtskraft des Erntevorsatzes durch einen Sensor ermittelt, kann er eingerichtet sein, den Hydraulikdruck im Hydraulikkreis des Hubwerks des Erntevorsatzes zu messen. Es wäre aber auch eine Messung mit einer Wägezelle an der Aufhängung des Erntevorsatzes an der Erntemaschine denkbar. Analog wird die Stützlast einer Anhängelast vorzugsweise an der Anhängekupplung durch einen Sensor erfasst.

Anzumerken ist, dass es auch denkbar wäre, die Position der verstellbaren Mittel selbsttätig oder manuell basierend auf Signalen von Sensoren einzustellen, die die Gewichtskräfte erfassen, mit denen sich die Mittel auf dem Erdboden abstützen.

Eine Veränderung des Abstands zwischen den vorderen und hinteren im Eingriff mit dem Erdboden befindlichen Mitteln während der Fahrt ist gefahrenträchtig, da sich das Fahr- und Lenkverhalten plötzlich ändern kann. Es bietet sich daher an, die Einrichtung zur Verstellung des Abstands mit einer Information über die jeweilige Geschwindigkeit der Erntemaschine zu beaufschlagen, die beispielsweise mit einem Geschwindigkeitssensor erfasst werden kann, und nur dann eine Veränderung des Abstands zuzulassen, wenn die Erntemaschine steht.

Beim Fahren auf einer Straße sind eine Reihe gesetzlicher Anforderungen zu erfüllen, die in vielen Fällen nur dann eingehalten werden können, wenn der Abstand zwischen den vorderen und hinteren im Eingriff mit dem Erdboden befindlichen Mitteln einen bestimmten Wert oder Bereich einhält. Auf einem Feld ist der Abstand hingegen beliebig. In einer bevorzugten Ausführungsform ist daher die Einrichtung zur Veränderung des Abstands zwischen den vorderen und hinteren im Eingriff mit dem Erdboden befindlichen Mitteln betreibbar, den Abstand auf einen bestimmten Wert zu bringen, beispielsweise den Maximalwert, falls sich die Maschine in einem Straßenfahrbetrieb befindet. Der Straßenfahrbetrieb kann anhand der Position eines Feld/Straßenbetriebsschalters erkannt werden. Alternativ oder zusätzlich wird die Stellung eines elektronischen Wahlschalters oder eines mechanischen Wahlhebels für die Übersetzungsstufe eines Schaltgetriebes des Fahrantriebs der Erntemaschine abgefragt. Befindet sich die Erntemaschine hingegen auf einem Feld, wird die oben beschriebene selbsttätige Einstellung des Abstands vorgenommen.

In den Zeichnungen ist ein nachfolgend näher beschriebenes Ausführungsbeispiel der Erfindung dargestellt. Es zeigt:
- Fig. 1: eine Seitenansicht einer selbstfahrenden Erntemaschine,
- Fig. 2: ein Schema einer Einrichtung zur Veränderung des Abstands zwischen den vorderen und hinteren im Eingriff mit dem Erdboden befindlichen Mitteln der Erntemaschine, und
- Fig. 3: ein Flussdiagramm, in der die Betriebsweise der Einrichtung veranschaulicht wird.

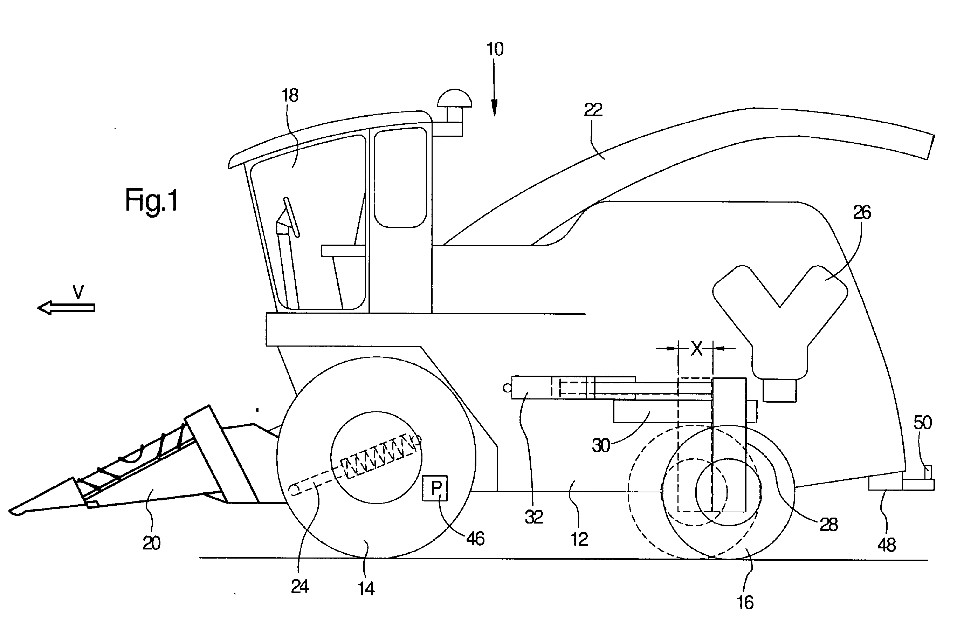

Die in Figur 1 gezeigte selbstfahrende Erntemaschine 10 in der Art eines selbstfahrenden Feldhäckslers baut sich auf einem Fahrgestell 12 auf, das von zwei vorderen im Eingriff mit dem Erdboden befindlichen Mitteln 14 in Form von Rädern und einem rückwärtigen im Eingriff mit dem Erdboden befindlichen Mittel 16 in Form eines einzelnen Rades getragen wird. Die Bedienung der Erntemaschine 10 erfolgt von einer Fahrerkabine 18 aus, von der aus ein Erntevorsatz 20 einsehbar ist. Die Erfindung kann außer an Feldhäckslern an beliebigen Erntemaschinen Verwendung finden, wie beispielsweise Mähdreschern, Traubenerntern, Baumwollerntern oder selbstfahrenden Ballenpressen.

Der Erntevorsatz 20 ist abnehmbar an der Erntemaschine 10 angebracht und durch einen beliebigen anderen Erntevorsatz austauschbar. Mittels des Erntevorsatzes 20 vom Boden aufge-nommenes Gut, z. B. Mais, Gras oder dergleichen wird durch Vorpresswalzen ins Innere der Erntemaschine 10 gefördert und einer Häckseltrommel zugeführt, die es in kleine Stücke häckselt und es einer Fördervorrichtung aufgibt. Das Gut verläßt die Erntemaschine 10 zu einem nebenherfahrenden Anhänger über einen drehbaren Austragsschacht 22. Der Erntevorsatz 20 ist um die Drehachse der Häckseltrommel schwenkbar am Fahrgestell 12 angelenkt. Die Verschwenkung, d. h. die Vorgabe der Höhe des in Vorwärtsfahrtrichtung vorderen Endes des Erntevorsatzes 20, wird mittels eines Hydraulikzylinders 24 durchgeführt, der sich zwischen dem Erntevorsatz 20 und dem Fahrgestell 12 erstreckt.

Im rückwärtigen Bereich der Erntemaschine 10 befindet sich ein Verbrennungsmotor 26, der ihre antreibbaren Elemente mit Antriebsenergie versorgt.

Die vorderen im Eingriff mit dem Erdboden befindlichen Mittel 14 sind starr (d. h. nicht lenkbar) mit dem Fahrgestell 12 verbunden und antreibbar. Das rückwärtige im Eingriff mit dem Erdboden befindliche Mittel 16 ist optional ebenfalls antreibbar. Außerdem ist das rückwärtige im Eingriff mit dem Erdboden befindliche Mittel 16 an einer Aufhängung 28 befestigt, deren Position in der Vorwärtsfahrtrichtung V der Erntemaschine 10 variabel ist. Dazu ist die Aufhängung 28 an einer horizontalen, sich in der Vorwärtsfahrtrichtung V erstreckenden Führung 30 verschiebbar gelagert und ein hydraulischer Verstellzylinder 32 erstreckt sich zwischen dem Fahrgestell 12 und der Aufhängung 28. Durch Verändern der Länge des Verstellzylinders 32 ist somit der Radstand der Erntemaschine 10, d. h. der Abstand zwischen dem im Eingriff mit dem Erdboden befindlichen Mitteln 14, 16, veränderbar. Das hintere Mittel 16 ist lenkbar, d. h. um die Hochachse drehbar, an der Aufhängung 28 befestigt und gibt die Fahrtrichtung der Erntemaschine 10 vor. Dazu ist ein Lenkzylinder (nicht gezeigt) vorgesehen, wie er beispielsweise in der US 4 222 452 A beschrieben ist.

Ein Vorzug der Verwendung eines einzelnen rückwärtigen Rads besteht in dem Versatz gegenüber den vorderen Rädern, der zur Verminderung der Bodenverdichtung beiträgt, und in dem erzielbaren kleinen Lenkradius. An der Erntemaschine 10 könnte jedoch auch eine konventionelle Hinterachse mit zwei lenkbaren Rädern angebracht sein. Die Hinterachse wäre dann über die Aufhängung 28 mit der Führung 30 und dem Verstellzylinder 32 verbunden.

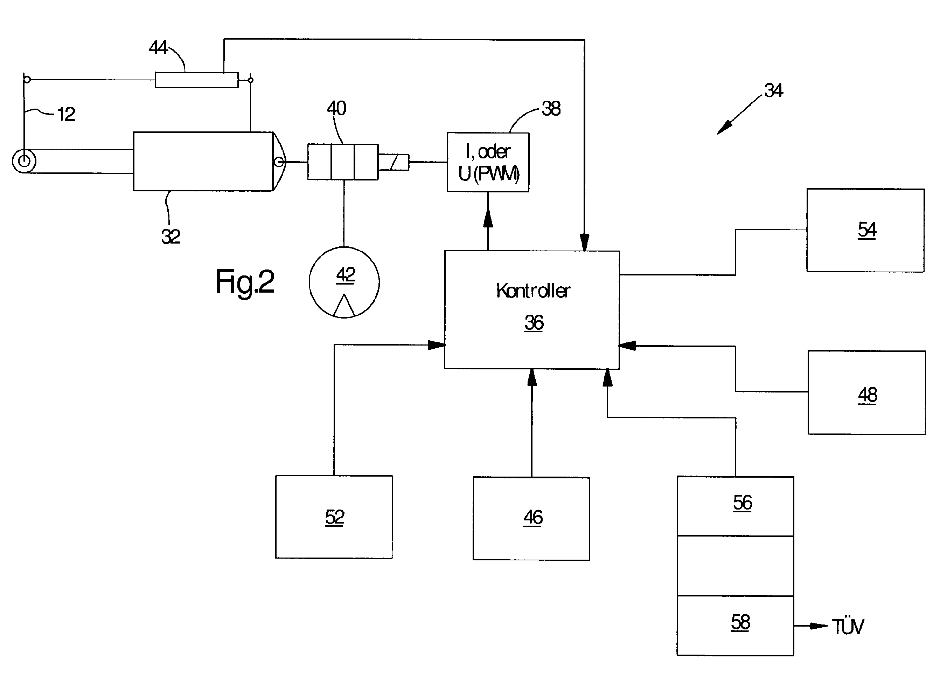

Die Gesamtkonfiguration der Einrichtung 34 zur Veränderung des Abstands zwischen den vorderen und hinteren Mitteln 14, 16 ist in der Figur 2 schematisch dargestellt. Eine elektronische, analog oder digital arbeitende Steuerung 36 ist elektrisch mit einer Ventilsteuereinrichtung 38 verbunden, die stromabhängig oder spannungsabhängig bzw. pulsweitenmoduliert ein Proportionalwegeventil 40 (oder ein beliebiges anderes geeignetes Ventil) ansteuert. Das Proportionalwegeventil 40 ist mit einer Quelle 42 unter Druck stehenden Hydraulikfluids und mit dem Verstellzylinder 32 verbunden. Eine mechanisch zwischen dem Fahrgestell 12 und der Aufhängung 28 angeordnete Positionserfassungseinrichtung 44 in Form eines Linearpotentiometers oder eines beliebigen anderen Sensors führt der Steuerung 36 eine Information über die jeweilige Position der Aufhängung 28 zu. Die Steuerung 36 ist somit eingerichtet, den Abstand zwischen den Mitteln 14, 16 unter Verwendung eines Rückkopplungssignals zu regeln.

Die Steuerung 36 ist weiterhin mit einem Erntevorsatzgewichtssensor 46 verbunden, der in den Hydraulikkreislauf des zur Verstellung der Höhe des Erntevorsatzes 20 dienenden Hydraulikzylinders 24 eingeschleift ist. Der Druck in diesem Hydraulikkreislauf enthält eine Information über die Gewichtskraft des Erntevorsatzes 20, da zum Anheben eines schwereren Erntevorsatzes 20 ein höherer Druck erforderlich ist als zum Anheben eines leichteren Erntevorsatzes 20. Mit dem Bezugszeichen 52 ist eine alternativ oder zusätzlich zum Erntevorsatzgewichtssensor 46 verwendbare Eingabeeinrichtung gekennzeichnet, die dem Bediener in der Fahrerkabine 18 erlaubt, die Art oder die Gewichtskraft bzw. Masse des Erntevorsatzes 20 einzugeben.

Auch erhält die Steuerung 36 eine Eingabe von einem Sensor 48, der die Stützlast eines Anhängers erfasst, der an einer Kupplung 50 am Heck der Erntemaschine 10 angekoppelt ist. Alternativ oder zusätzlich zum Sensor 48 kann eine Eingabeeinrichtung verwendet werden, die dem Bediener in der Fahrerkabine 18 erlaubt, die Art oder die Gewichtskraft bzw. Masse eines Anhängers an der Kupplung 50 einzugeben.

Ein Geschwindigkeitssensor 54 erfasst die aktuelle Vortriebsgeschwindigkeit der Erntemaschine 10. Er kann mit einem der Mittel 14, 16 zusammenwirken oder ein Radarsensor sein, der direkt mit dem Erdboden zusammenwirkt.

Schließlich ist die Steuerung 36 mit einem Übersetzungsstufensensor 56 und/oder einem Feld/Straßenbetriebsschalter 58 verbunden. Der Übersetzungsstufensensor 56 erfasst die jeweils ausgewählte Übersetzungsstufe eines Getriebes des Fahrantriebs der Erntemaschine 10. Der Feld/Straßenbetriebsschalter 58 befindet sich in der Fahrerkabine 18 und dient dem Bediener dazu, die Betriebsart der Erntemaschine 10 vorzugeben. In der Straßenbetriebsart lassen sich alle zum Fahren auf einer Straße erforderlichen Elemente der Erntemaschine 10 betreiben, während die nur zum Ernten erforderlichen Elemente nicht aktivierbar sind. Analog sind im Feldbetrieb nur die zum Ernten erforderlichen Elemente einschaltbar, während die nur zum Fahren auf einer Straße erforderlichen Elemente deaktiviert sind.

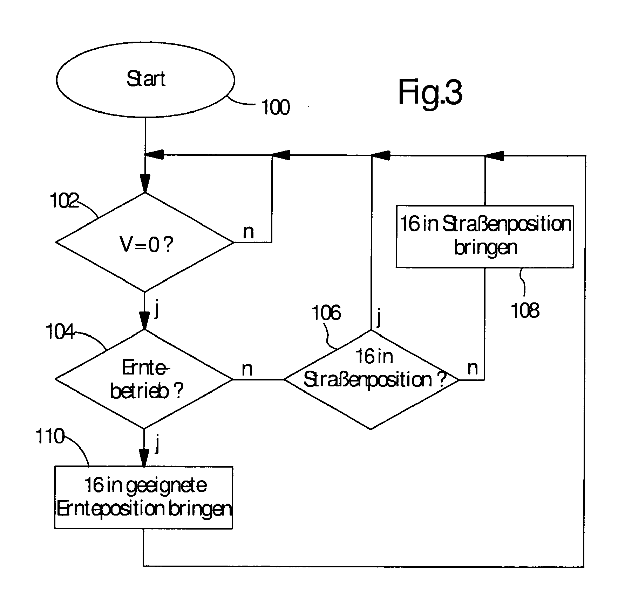

Die Betriebsweise der Einrichtung wird im Folgenden anhand des in der Figur 3 wiedergegebenen Flussdiagramms erläutert.

Nach dem Start im Schritt 100, der bei oder nach dem Starten der Erntemaschine 10 durchgeführt wird, wird zunächst im Schritt 102 abgefragt, ob die Vortriebsgeschwindigkeit der Erntemaschine 10 null ist, d.h. ob das Signal des Geschwindigkeitssensors 54 darauf hinweist, dass die Erntemaschine 10 steht. Ist das nicht der Fall, folgt wieder der Schritt 102. Eine Verstellung des hinteren Mittels 16 ist somit nicht während der Fahrt möglich.

Anderenfalls folgt der Schritt 104, in dem der Übersetzungsstufensensor 56 und/oder der Feld/Straßenbetriebsschalter 58 abgefragt wird. Stellt der Übersetzungsstufensensor 56 fest, dass sich das Getriebe des Fahrantriebs der Erntemaschine 10 im höchsten Gang befindet, wird daraus die Information entnommen, dass die Erntemaschine 10 sich im Straßenfahrbetrieb befindet, da diese Übersetzungsstufe im Erntebetrieb nicht verwendet wird. Auch anhand des Feld/Straßenbetriebsschalters 58 kann überprüft werden, ob sich die Erntemaschine 10 im Erntebetrieb befindet oder nicht.

Ist sie nicht im Erntebetrieb, folgt der Schritt 106, in dem eine Abfrage erfolgt, ob sich die Aufhängung 28 und das daran befestigte hintere im Eingriff mit dem Erdboden befindliche Mittel 16 in der (durch die Straßenverkehrsbehörden zugelassenen) Position für eine Fahrt auf einer öffentlichen Straße befindet. Ist das der Fall, folgt wieder Schritt 102, anderenfalls der Schritt 108, in der die Steuerung 36 unter Verwendung des Rückkopplungssignals der Positionserfassungseinrichtung 44 und der Ventilsteuereinrichtung 38 das Mittel 16 in die erwähnte Position für die Straßenfahrt verbringt.

Ergibt der Schritt 104, dass sich die Erntemaschine 10 im Erntebetrieb befindet, folgt der Schritt 110. Anhand der Signale des Erntevorsatzgewichtssensors 46 und des Sensors 48 für die Stützlast an der Kupplung 50 und optional der Eingabeeinrichtung 52 wird berechnet, in welche Position die Aufhängung 28 mit dem hinteren im Eingriff mit dem Erdboden stehenden Mittel 16 zu bringen ist, um eine geeignete Gewichtsverteilung auf die Mittel 14 und 16 zu erzielen. Diese geeignete Gewichtsverteilung zeichnet sich dadurch aus, dass ein hinreichender Anteil an der Gewichtskraft von dem hinteren Mittel 16 aufgenommen wird. Dadurch wird die Bodenverdichtung durch die vorderen Mittel 14 reduziert und man erhält ein gutes Lenkverhalten. Entsprechend des Ergebnisses der Berechnung wird die Position der Aufhängung 28 variiert. Es könnten zusätzlich Sensoren an den Achsen der Mittel 14, 16 verwendet werden, um die erzielte Gewichtsverteilung zu überprüfen bzw. feinabzustimmen. Auf den Schritt 110 folgt wieder der Schritt 102.

Die Figur 3 geht davon aus, dass die Übersetzung des Getriebes des Fahrantriebs nur im Stillstand änderbar ist, und dass auch der Feld/Straßenbetriebsschalter 58 nur im Stillstand betätigt werden kann. Sollten diese Voraussetzungen nicht zutreffen, ist das Diagramm in Figur 3 geeigneten Modifikationen zu unterziehen, um zu verhindern, dass bei einer Änderung der Betriebsart der Erntemaschine 10 während der Fahrt eine unerwünschte Position der Aufhängung 28 und der hinteren Mittel 16 erzielt wird.

## Patentansprüche

1. Selbstfahrende Erntemaschine (10) mit einem Fahrgestell (12), an dem sich im Eingriff mit dem Erdboden befindliche Mittel (14, 16) angebracht sind, die zum Vortrieb und zum Lenken der Erntemaschine (10) eingerichtet sind und von denen vordere Mittel (14) in einer Vorwärtsfahrtrichtung (V) vor hinteren Mitteln (16) angeordnet sind, und mit einer Einrichtung (34), die betreibbar ist, zur Erzielung einer geeigneten Gewichtskraftverteilung auf die vorderen und hinteren Mittel (14, 16) den Abstand zwischen den vorderen Mitteln (14) und den hinteren Mitteln (16) entlang der Vorwärtsfahrtrichtung (12) zu verändern, **dadurch gekennzeichnet, dass** die Einrichtung (34) betreibbar ist, den Abstand zwischen den vorderen und den hinteren Mitteln (14, 16) selbsttätig zu verändern.

2. Erntemaschine (10) nach Anspruch 1, **dadurch gekennzeichnet, dass** die Einrichtung (34) betreibbar ist, den Abstand zwischen den vorderen und den hinteren Mitteln (14, 16) abhängig von der Gewichtskraft eines Erntevorsatzes (20) und/oder einer Anhängelast zu verändern.

3. Erntemaschine (10) nach Anspruch 2, **dadurch gekennzeichnet, dass** die Einrichtung (34) die Gewichtskraft des Erntevorsatzes (20) und/oder der Anhängelast mittels eines Sensors (46, 48) und/oder durch eine Bedienereingabe (52) und/oder durch dem Erntevorsatz (20) und/oder der Anhängelast zugeordnete elektronische Speichermittel erfasst.

4. Erntemaschine (10) nach Anspruch 3, **dadurch gekennzeichnet, dass** der Sensor (46) den Hydraulikdruck in einem Hydraulikkreislauf eines Hubwerks des Erntevorsatzes (20) erfasst.

5. Erntemaschine (10) nach Anspruch 3 oder 4, **dadurch gekennzeichnet, dass** der Sensor (48) die Anhängelast an einer Anhängekupplung (50) erfasst.

6. Erntemaschine (10) nach einem der Ansprüche 1 bis 5, **dadurch gekennzeichnet, dass** die Einrichtung (36) nur dann den Abstand zwischen den vorderen und den hinteren Mitteln (14, 16) verändert, solange die Erntemaschine (10) steht.

7. Erntemaschine (10) nach Anspruch 6, **dadurch gekennzeichnet, dass** die Einrichtung (34) mit einem Geschwindigkeitssensor (54) verbunden ist.

8. Erntemaschine (10) nach einem der Ansprüche 1 bis 7, **dadurch gekennzeichnet, dass** die Einrichtung (34) betreibbar ist, den Abstand zwischen den vorderen und den hinteren Mitteln (14, 16) auf einen bestimmten Wert, insbesondere einen Maximalwert, zu bringen, wenn sich die Erntemaschine (10) in einem Straßenfahrbetrieb befindet.

9. Erntemaschine (10) nach Anspruch 8, **dadurch gekennzeichnet, dass** die Einrichtung (34) betreibbar ist, den Straßenfahrbetrieb anhand der Stellung eines Feld/Straßenbetriebsschalters (58) und/oder eines Sensors (56) für eine Übersetzungsstufe eines Getriebes des Fahrantriebs der Erntemaschine (10) zu erkennen.

## Claims

1. A self-propelled harvesting machine (10) with a chassis (12), means (14, 16) engaging the ground fitted thereon which are arranged for propulsion and steering of the harvesting machine (10) and of which front means (14) are arranged ahead in a direction (V) of forward travel of rear means (16), and with a device (34) which is operable to change the spacing between the front means (14) and the rear means (16) along the direction (V) of forward travel in order to achieve a suitable distribution of weight on the front and rear means (14, 16), **characterized in that** the device (34) is operable to change the spacing between the front and rear means (14, 16) automatically.

2. A harvesting machine (10) according to claim 1, **characterized in that** the device (34) is operable to change the spacing between the front and rear means (14, 16) in dependence on the weight of a harvesting header (20) and/or a trailer load.

3. A harvesting machine (10) according to claim 2, **characterized in that** the device (34) detects the weight of the harvesting header (20) and/or the trailer load by means of a sensor (46, 48) and/or through an operator input (52) and/or through an electronic storage means associated with the harvesting header (20) and/or the trailer load.

4. A harvesting machine (10) according to claim 3, **characterized in that** the sensor (46) detects the hydraulic pressure in a lift mechanism of the harvesting header (20).

5. A harvesting machine (10) according to claim 3 or 4, **characterized in that** the sensor (48) detects the trailer load on a trailer coupling (50).

6. A harvesting machine (10) according to any of claims 1 to 5, **characterized in that** the device (34) only changes the spacing between the front and rear means (14, 16) while the harvesting machine is stationary.

7. A harvesting machine (10) according to claim 6, **characterized in that** the device (34) is connected to a speed sensor (54).

8. A harvesting machine (10) according to any of claims 1 to 7, **characterized in that** the device (34) is operable to bring the spacing between the front and rear means (14, 16) to a specific value, in particular a maximum value, when the harvesting machine (10) is in road travel operation.

9. A harvesting machine (10) according to claim 8, **characterized in that** the device (34) is operable to detect the road travel operation on the basis of the position of a field/road operation switch (58) and/or a sensor (56) for a transmission step of a transmission of the travelling drive of the harvesting machine (10).

## Revendications

1. Machine de récolte (10) automotrice, comportant un châssis de roulement (12), sur lequel sont fixés des moyens (14, 16) en prise avec le sol, qui sont conçus pour faire avancer et guider la machine de récolte (10) et parmi lesquels des moyens avant (14) sont situés, par référence au sens d'avancement (V), en amont des moyens arrière (16), et comportant un dispositif (34) qui est destiné à être utilisé pour faire varier la distance entre les moyens avant (14) et les moyens arrière (16) suivant le sens d'avancement (V) en vue d'obtenir une répartition appropriée du poids sur les moyens avant et arrière (14, 16), **caractérisée en ce que** le dispositif (34) peut être utilisé pour faire varier automatiquement la distance entre les moyens avant et arrière (14, 16).

2. Machine de récolte (10) selon la revendication 1, **caractérisée en ce que** le dispositif (34) peut être utilisé pour faire varier la distance entre les moyens avant et arrière (14, 16) en fonction du poids d'un outil frontal (20) et/ou d'une charge remorquée.

3. Machine de récolte (10) selon la revendication 2, **caractérisée en ce que** le dispositif (34) détecte le poids de l'outil frontal (20) et/ou de la charge remorquée au moyen d'un capteur (46, 48) et/ou par une entrée de l'utilisateur (52) et/ou par des moyens de mémoire électroniques associés à l'outil frontal (20) et/ou à la charge remorquée.

4. Machine de récolte (10) selon la revendication 3, **caractérisée en ce que** le capteur (46) enregistre la pression hydraulique dans un circuit hydraulique d'un mécanisme de levage de l'outil frontal (20).

5. Machine de récolte (10) selon la revendication 3 ou 4, **caractérisée en ce que** le capteur (48) enregistre la charge remorquée sur un système d'attelage (50).

6. Machine de récolte (10) selon l'une quelconque des revendications 1 à 5, **caractérisée en ce que** le dispositif (36) fait varier la distance entre les moyens avant et arrière (14, 16) uniquement pendant que la machine de récolte (10) est à l'arrêt.

7. Machine de récolte (10) selon la revendication 6, **caractérisée en ce que** le dispositif (34) est relié à un capteur de vitesse (54).

8. Machine de récolte (10) selon l'une quelconque des revendications 1 à 7, **caractérisée en ce que** le dispositif (34) peut être utilisé pour amener la distance entre les moyens avant et arrière (14, 16) à une valeur déterminée, en particulier une valeur maximale, lorsque la machine de récolte (10) est en mode de circulation sur route.

9. Machine de récolte (10) selon la revendication 8, **caractérisée en ce que** le dispositif (34) peut être utilisé pour détecter le mode de circulation sur route à l'appui de la position d'un commutateur de sélection champ ou route (58) et/ou d'un capteur (56) pour un niveau de transmission d'un engrenage du système d'entraînement de la machine de récolte (10).
